# EUROPEAN PATENT SPECIFICATION

(11) **EP 2 407 067 B1**
(45) Date of publication and mention of the grant of the patent: **15.05.2013**
(21) Application number: 10169906.4
(22) Date of filing: 16.07.2010
(51) Int. Cl.: A47J 31/18, A47J 31/057

(54) **Mechanical thermostat double receptacle fully automated tea machine**
Automatische Teevorrichtung mit Doppelbehälter und einer Pumpe
Appareil automatique de thé à double conteneur disposant d'une pompe

(43) Date of publication of application: 18.01.2012
(73) Proprietor: Eksen Makine Sanayi ve Ticaret A.S., 41480 Kocaeli (TR)
(72) Inventor: Tahincioglu, Besim, 41480, Kocaeli (TR)
(74) Representative: Sevinç, Erkan

(56) References cited:
- WO-A1-2010/041003
- US-A1- 2004 149 138
- US-A1- 2005 132 892

## Description

### Technical Field of the Invention

The present invention relates to a tea preparing apparatus and more particularly a double receptacle automatic tea machine with a mechanical thermostat.

### Background of the Invention

Tea is traditionally consumed on a daily basis in large quantities in the country of the applicant. A good flavor tea is believed to be prepared by way of boiling water in a first receptacle and steeping tea leaves in hot water in a second receptacle.

A common problem of automated tea preparing machines is that they provide only a limited automation by which water is boiled in a first receptacle and then kept warm therein as long as preferred to allow brewing of tea leaves in a second top receptacle. Therefore, to complete brewing, the user himself must add water to the top receptacle from the boiling receptacle; which means a step which is merely user dependant to the extent that in the absence of user intervention, the whole tea preparing process is aborted is in question.

Nevertheless, it is observed that tea consumers are not reluctant to involve in the tea preparing process and yet prefer such "half-automated" tea preparing machines to conventional non-electrical tea preparing methods. A fully automated tea preparing apparatus having a reasonable price tag and which can transfer boiled water to the top receptacle where dry tea leaves lie is yet believed to be a major step toward consumer satisfaction. Such a machine is described, for instance, in US 2004/0149138 A1.

Another problem arising in association with the "good flavor" of the prepared tea is the temperature of the water in the boiling receptacle which is transferred therefrom to the top receptacle. It is believed that a "good flavor" is obtained only if dry tea leaves are exposed to hot water the temperature of which is within a predetermined range. Otherwise flavor of the leaves is not adequately extracted.

To ensure a "good flavor", the present invention proposes a safe temperature margin within the range allowing transfer of the boiled water at the required temperature.

### Objects of the Invention

Primary object of the present invention is to provide an electrical tea machine which is fully automated to the extent that it can carry out both boiling and brewing operations without user intervention being necessitated.

Another object of the present invention is to provide a fully automated tea machine having a safe temperature margin which enables transfer of the boiled water at the required temperature.

### Summary of the Invention

The present invention proposes a domestic appliance and specifically a tea machine having a first receptacle for boiling water and a second receptacle containing plant leaves to be brewed. Said second receptacle is conventionally placed on top of said first receptacle.

The electrical household appliance of the invention comprises a first receptacle for boiling water and a second receptacle suitable for placing on top of said first receptacle such that plant leaves are placed therein to be brewed in heated water. Said first receptacle comprises a bidirectional valve selectively establishing fluid communication with said second receptacle in response to presence of a pusher mechanism of said first receptacle in engaging relationship with said bidirectional valve.

### Brief Description of the Figures

Accompanying drawings are given solely for the purpose of exemplifying a fully automated tea machine whose advantages over prior art were outlined above and will be explained in detail hereinafter:
Fig. 1 demonstrates a cross-sectional view of the tea apparatus according to the present invention.

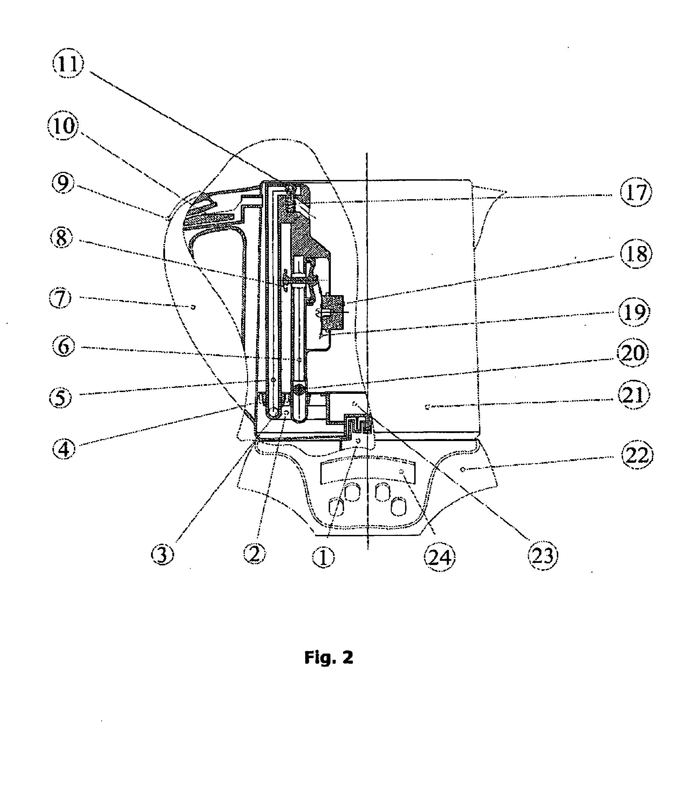

Fig. 2 demonstrates a cross-sectional view of the boiling receptacle of the tea apparatus according to the present invention.
Fig. 3a and 3b demonstrate cross-sectional views of the snapping action of the bimetal thermostat and displacement of the silicon valve in response thereto according to the present invention.
Fig. 4a and 4b demonstrate cross-sectional views of the bidirectional valve selectively allowing water transfer to the upper receptacle according to the present invention.

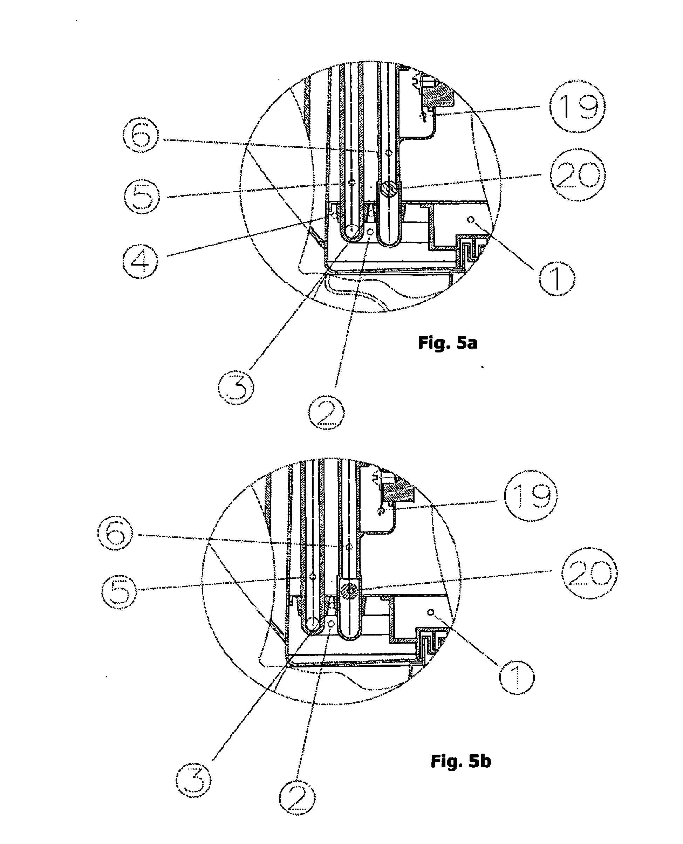

Fig. 5a and 5b demonstrate cross-sectional views of the xx according to the present invention.
Fig. 6 demonstrates the evacuation conduit and the inlet conduit extending perpendicular in the direction of the upper receptacle with respect to the intermediary conduit's plane according to the present invention.

### Detailed Description of the Invention

Referring now to the figures outlined above, the present invention proposes an electrical household appliance for preparing tea in a traditional manner, i.e. by way of using separate boiling and brewing receptacles (respectively 21 and 15). The appliance comprises a first receptacle (21) for boiling water prior to brewing and a second receptacle (15) in which tea leaves are placed and brewed in hot water accordingly.

Both receptacles (21, 15) are put one above another to allow thermal communication and heat energy radiated from a heat source in communication with said first receptacle (21) also reach said second receptacle (15). The base of said second receptacle (15) therefore covers the open upper end of said first receptacle (21) in a conventional manner.

The heating arrangement of the tea preparation apparatus comprises a first electrical heating means (3) having a greater resistance with respect to a second electrical heating means (4) with a lower active power dissipation.

As is generally practiced in the available art, effective power consumption by said heat source is lowered during brewing. Temperature in the lower receptacle may be controlled by means of a plurality of control arrangements and sensors; that is while temperature in the lower receptacle (21) may be kept in a near-boiling temperature, different control schemes to allow continuous or discontinuous powering of the heat source can be applied.

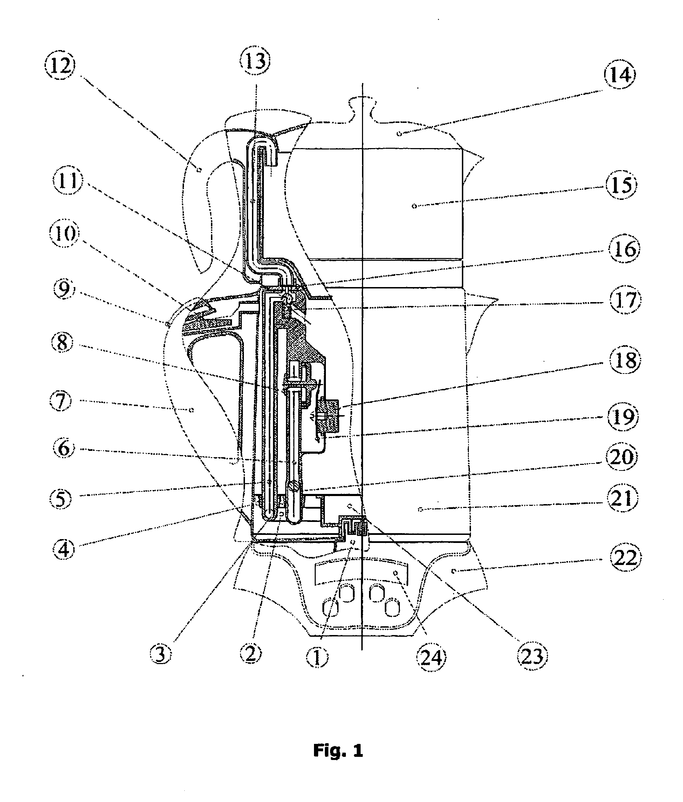

Referring to Fig. 1, the lower receptacle (21) according to the present invention comprises a handle (7) joined to the lower receptacle (21) body. The machine conventionally comprises a steam switch (10) and a steam switch button (9). The apparatus can typically be set to boiling mode by said steam switch button (9).

The upper receptacle comprises a lid (14) and a handle (12) as seen in Fig. 1. The lower receptacle (21) according to the present invention is connected to an electrical heater base (22), said base (22) comprising an electrical connector (23) associated with an electrical adaptor (1).

The tea preparing apparatus according to the invention comprises an electronic control unit (24) allowing a user start the apparatus automatically at a specified time or manually. The boiling receptacle (21) should be filled with water prior to switching the apparatus on. Automatic transfer of boiled water will be initiated only if the fluid communication from the lower receptacle (21) to the upper receptacle (15) is established as explained below.

The upper receptacle (15) according to the present invention comprises a pusher mechanism (16) having an axial rod slidably engaged within a spring housing in which a spring (17) biases a ball against said axial rod. Said spring loaded ball in said spring housing act as bidirectional valve (11) selectively establishing fluid communication with said upper receptacle (15) or teapot (15).

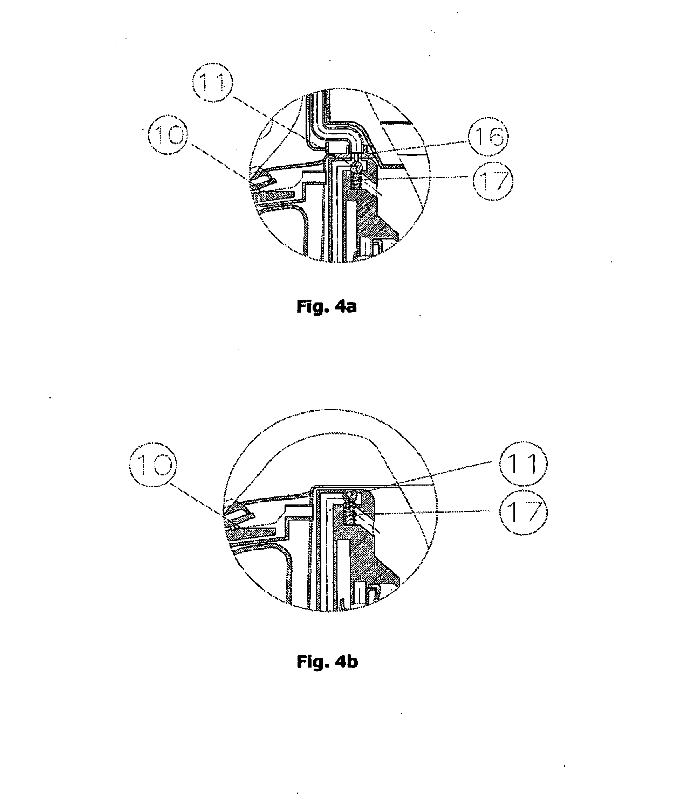

When said upper receptacle (15) is appropriately positioned on top of said lower receptacle (21), a fluid communication is established between a boiler evacuation conduit (5) and an intake orifice equipped with said pusher mechanism (16) of a teapot (15) conduit (13). Said teapot (15) conduit (13) therefore provides that boiled water is poured out of its vent down, on top of tea leaves lying on the ground of the receptacle (15). As seen in Fig. 4b, in the absence of the teapot (15) appropriately positioned with its pusher mechanism (16) having engaging relationship with said bidirectional valve (11), said bidirectional valve (11)'s ball joint is freely pushed up by said helical spring (17) such that boiled water rising due to siphon action in said evacuation conduit (5) is conveyed from said conduit's (5) upper end back to the lower receptacle (21) passing through said spring (17).

The initiation of the siphon action allowing transfer of boiled water to said teapot (15) as explained above is controlled as to the temperature of the water to be transferred as this is believed to be crucial in the flavor of the brewed tea. To this end, a disc type bimetal thermostat (19) which can reverse its warping *direction* in response to temperature change is provided. Said mechanical thermostat (19) is insulated from water in a water-proof chamber and is in conduction communication with a corrosion resistant material boss (18). Said boss (18) accumulating heat actuates said thermostat (19) within a temperature range of 94 +/- 5° C. Therefore, it is ensured that siphon action is initiated at a predetermined temperature.

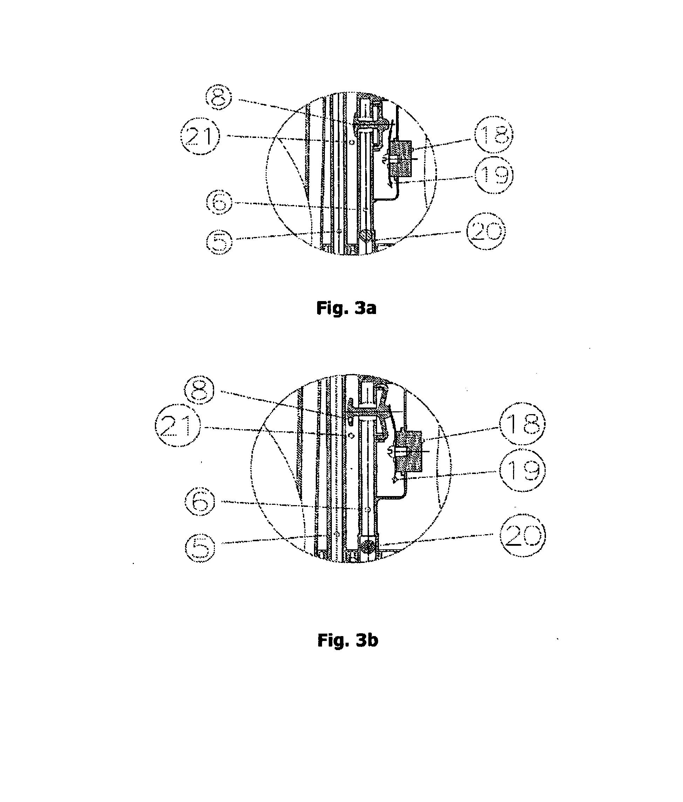

Actuation of said bimetal disc element (19) advances a silicon valve (8), which in return allows hot water to flow into an inlet conduit (6). Snapping action of the bimetal element (19) and displacement of the silicon valve (8) in response thereto is demonstrated in Fig. 3a and 3b.

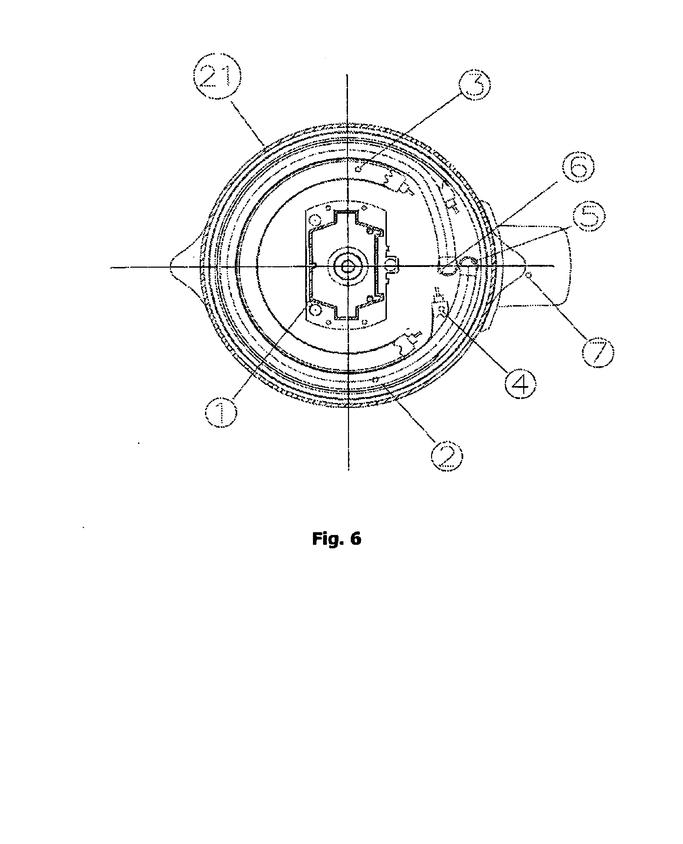

Said silicon valve (8), normally blocking said inlet conduit (6) is a resilient element displacing to open a water passageway (not shown) through its body. Hot water, flowing into the inlet conduit (6) from an inlet (not shown) of said inlet conduit (6) advances down the conduit (6) and reaches said evacuation conduit (5) though a intermediary conduit (2) perimetrically lying on the ground of the lower receptacle (21). Flow of water in the reverse direction is blocked by a unidirectional valve (20) downstream said inlet conduit (6). Fig. 6 demonstrates said evacuation conduit (5) and said inlet conduit (6) extending perpendicular in the direction of said upper receptacle (15) with respect to said intermediary conduit's (2) plane parallel to the ground of said lower receptacle (21).

Fig. 6 also demonstrate configuration of the greater wattage resistance (3) with respect to the lower wattage resistance (4). The greater wattage resistance (3) is encircled by the perimetrically extending lower wattage resistance directly on top of which said intermediary conduit (2) is disposed.

When 98° C temperature is reached in the lower receptacle (21), said steam switch (10) activates "keep warm" mode and power is only supplied to said lower wattage resistance (4) instead of said greater wattage resistance (3) together with said lower wattage resistance (4).

In a nutshell, the present invention provides an electrical household appliance comprising a first receptacle (21) for boiling water and a second receptacle (15) in thermal communication with said first receptacle (21) and in which plant leaves are placed in heated water for brewing. Said second receptacle (15) is suitable for placing on top of said first receptacle (21) such that the base of said second receptacle (15) cover the upper open end of said first receptacle (21). Said first receptacle (21) comprises a bidirectional valve (11) selectively establishing fluid communication with said second receptacle (15) in response to presence of a pusher mechanism (16) of said first receptacle (15) in engaging relationship with said bidirectional valve (11).

## Claims

1. An electrical household appliance comprising a first receptacle (21) for boiling water and a second receptacle (15) in thermal communication with said first receptacle (21) and in which plant leaves are placed in heated water for brewing, said second receptacle (15) also being suitable for placing on top of said first receptacle (21) such that the base of said second receptacle (15) cover the upper open end of said first receptacle (21) wherein said first receptacle (21) comprises a bidirectional valve (11) selectively establishing fluid communication with said second receptacle (15) in response to presence of a pusher mechanism (16) of said second receptacle (15) in engaging relationship with said bidirectional valve (11).

2. An electrical household appliance as set forth in Claim 1 wherein said pusher mechanism (16) has a rod slidably engaged within a spring housing of said bidirectional valve (11) in which a spring (17) biases a ball against said rod.

3. An electrical household appliance as set forth in Claim 1 or 2 wherein said bidirectional valve (11) conveys heated water back to said first receptacle (21) in response to the absence of said pusher mechanism (16) of said second receptacle (15)

4. An electrical household appliance as set forth in Claim 1 or 3 wherein said first receptacle (21) comprises a bimetal thermostat (19) reversing its warping *direction* in response to temperature change.

5. An electrical household appliance as set forth in Claim 4 wherein said bimetal thermostat (19) is in thermally conductive communication with a boss (18) immersed in water.

6. An electrical household appliance as set forth in Claim 5 wherein said boss is made of a corrosion resistant material.

7. An electrical household appliance as set forth in Claim 5 or 6 wherein said bimetal thermostat (19) is insulated from water in a water-proof chamber.

8. An electrical household appliance as set forth in Claim 5, 6 or 7 wherein actuation of said bimetal thermostat (19) moves a silicon valve (8), which in return allows hot water to flow into an inlet conduit (6).

9. An electrical household appliance as set forth in Claim 8 wherein said inlet conduit (6) is connected to an evacuation conduit (5) whose end leads to said bidirectional valve (11).

10. An electrical household appliance as set forth in Claim 9 wherein said inlet conduit (6) is connected to said evacuation conduit (5) though a intermediary conduit (2) perimetrically lying on the ground of said lower receptacle (21).

11. An electrical household appliance as set forth in Claim 10 wherein flow of water in a direction other than downstream said inlet conduit (6) is blocked by a unidirectional valve (20).

12. An electrical household appliance as set forth in Claim 11 wherein said evacuation conduit (5) and said inlet conduit (6) extend perpendicular with respect to said intermediary conduit's (2) plane parallel to the ground of said lower receptacle (21).

13. An electrical household appliance as set forth in any of previous claims wherein said appliance comprises a first electrical heating means (3) having a greater resistance with respect to a second electrical heating means (4) with a lower resistance.

14. An electrical household appliance as set forth in Claim 13 wherein said greater wattage resistance (3) is encircled by the perimetrically extending lower wattage resistance directly on top of which said intermediary conduit (2) is disposed.

## Patentansprüche

1. Elektrisches Haushaltsgerät mit einem ersten Behälter (21) zum Kochen von Wasser und einem zweiten Behälter (15), der in thermischer Verbindung mit dem ersten Behälter (21) steht und in den Blätter in erhitztes Wasser zum Aufbrühen gelegt werden, wobei der zweite Behälter (15) auch dazu geeignet ist, so auf dem ersten Behälter (21) angeordnet zu werden, dass die Basis des zweiten Behälters (15) das obere, offene Ende des ersten Behälters (21) abdeckt, wobei der erste Behälter (21) ein Zweirichtungs-Ventil (11) aufweist, welches in Reaktion auf das Vorhandensein eines Stößelmechanismus (16) des zweiten Behälters (15) im Eingriff mit dem Zweirichtungs-Ventil (11) selektiv eine Fluidverbindung mit dem zweiten Behälter (15) herstellt.

2. Elektrisches Haushaltsgerät nach Anspruch 1, bei dem der Stößelmechanismus (16) eine Stange umfasst, die verschiebbar in einem Federgehäuse des Zweirichtungs-Ventils (11) in Eingriff ist, in dem eine Feder (17) eine Kugel gegen die Stange drängt.

3. Elektrisches Haushaltsgerät nach Anspruch 1 oder 2, bei dem das Zweirichtungs-Ventil (11) erhitztes Wasser in Reaktion auf die Abwesenheit des Stößelmechanismus (16) des zweiten Behälters (15) zurück zum ersten Behälter (21) führt.

4. Elektrisches Haushaltsgerät nach Anspruch 1 oder 3, bei dem der erste Behälter (21) ein Bimetallthermostat (19) aufweist, welches seine Wölbungsrichtung in Reaktion auf eine Temperaturänderung umkehrt.

5. Elektrisches Haushaltsgerät nach Anspruch 4, bei dem der Bimetallthermostat (19) in thermisch leitender Verbindung mit einem Ansatz (18) steht, welcher sich unter Wasser befindet.

6. Elektrisches Haushaltsgerät nach Anspruch 5, bei dem der Ansatz aus einem korrosionsbeständigen Material besteht.

7. Elektrisches Haushaltsgerät nach Anspruch 5 oder 6, bei dem der Bimetallthermostat (19) in einer wasserdichten Kammer vom Wasser isoliert ist.

8. Elektrisches Haushaltsgerät nach Anspruch 5, 6 oder 7, bei dem eine Betätigung des Bimetallthermostats (19) ein Silikonventil (8) bewegt, welches wiederum heißem Wasser erlaubt, in eine Einlassleitung (6) zu strömen.

9. Elektrisches Haushaltsgerät nach Anspruch 8, bei dem die Einlassleitung (6) mit einer Entleerungsleitung (5) verbunden ist, deren Ende zum Zweirichtungs-Ventil (11) führt.

10. Elektrisches Haushaltsgerät nach Anspruch 9, bei dem die Einlassleitung (6) durch eine Zwischenleitung (2), die am Rand des Bodens des unteren Behälters (21) liegt, mit der Entleerungsleitung (5) verbunden ist.

11. Elektrisches Haushaltsgerät nach Anspruch 10, bei dem ein Wasserfluss in einer anderen Richtung als stromabwärts durch die Einlassleitung (6) mittels eines Rückschlagventils (20) blockiert ist.

12. Elektrisches Haushaltsgerät nach Anspruch 11, bei dem die Entleerungsleitung (5) und die Einlassleitung (6) sich rechtwinklig zur Ebene der Zwischenleitung (2) parallel zum Boden des unteren Behälters (21) erstrecken.

13. Elektrisches Haushaltsgerät nach einem der vorhergehenden Ansprüche, bei dem das Gerät eine erste elektrische Heizeinrichtung (3) aufweist, die einen größeren Widerstand als eine zweite elektrische Heizeinrichtung (4) mit einem niedrigeren Widerstand hat.

14. Elektrisches Haushaltsgerät nach Anspruch 13, bei dem der größere Wattleistungswiderstand (3) umgeben ist von dem sich am Umfangsrand erstreckenden geringeren Wattleistungswiderstand, auf welchem unmittelbar die Zwischenleitung (2) angeordnet ist.

## Revendications

1. Appareil électroménager électrique comprenant un premier réceptacle (21) pour bouillir de l'eau et un second réceptacle (15) en communication thermique avec ledit premier réceptacle (21) et dans lequel les feuilles de plantes sont placées dans de l'eau chauffée en vue d'une infusion, ledit second réceptacle (15) étant également adapté pour être placé sur le dessus dudit premier récipient (21) de telle sorte que la base dudit second réceptacle (15) recouvre l'extrémité supérieure ouverte dudit premier réceptacle (21), dans lequel ledit premier réceptacle (21) comprend une soupape bidirectionnelle (11) établissant sélectivement une communication de fluide avec ledit second réceptacle (15) en réponse à la présence d'un mécanisme de poussée (16) dudit second réceptacle (15) en relation de mise en prise avec ladite soupape bidirectionnelle (11).

2. Appareil électroménager électrique selon la revendication 1, dans lequel ledit mécanisme de poussée (16) comporte une tige engagée de manière coulissante à l'intérieur d'un boîtier de ressort de ladite soupape bidirectionnelle (11) dans lequel un ressort (17) sollicite une bille contre ladite tige.

3. Appareil électroménager électrique selon la revendication 1 ou 2, dans lequel ladite soupape bidirectionnelle (11) ramène l'eau chauffée vers ledit premier récipient (21) en réponse à l'absence dudit mécanisme de poussée (16) dudit second réceptacle (15).

4. Appareil électroménager électrique selon la revendication 1 ou 3, dans lequel ledit premier réceptacle (21) comprend un thermostat bimétallique (19) inversant sa direction de déformation en réponse à un changement de température.

5. Appareil électroménager électrique selon la revendication 4, dans lequel ledit thermostat bimétallique (19) est en communication de conduction thermique avec un bossage (18) immergé dans l'eau.

6. Appareil électroménager électrique selon la revendication 5, dans lequel ledit bossage est réalisé dans un matériau résistant à la corrosion.

7. Appareil électroménager électrique selon la revendication 5 ou 6, dans lequel ladite thermostat bimétallique (19) est isolé de l'eau dans une chambre étanche à l'eau.

8. Appareil électroménager électrique selon la revendication 5, 6 ou 7, dans lequel l'actionnement dudit thermostat bimétallique (19) déplace une soupape en silicone (8), qui permet en retour à de l'eau chaude de circuler dans un conduit d'entrée (6).

9. Appareil électroménager électrique selon la revendication 8, dans lequel ledit conduit d'entrée (6) est relié à un conduit d'évacuation (5) dont l'extrémité aboutit à ladite soupape bidirectionnelle (11).

10. Appareil électroménager électrique selon la revendication 9, dans lequel ledit conduit d'entrée (6) est relié audit conduit d'évacuation (5) à travers un conduit intermédiaire (2) se trouvant dans le périmètre au sol dudit réceptacle inférieur (21).

11. Appareil électroménager électrique selon la revendication 10, dans lequel l'écoulement de l'eau dans une direction autre que en aval dudit conduit d'entrée (6) est bloqué par une soupape unidirectionnelle (20).

12. Appareil électroménager électrique selon la revendication 11, dans lequel ledit conduit d'évacuation (5) et ledit conduit d'entrée (6) s'étendent perpendiculairement par rapport audit plan de conduit intermédiaire (2) parallèle au sol dudit réceptacle inférieur (21).

13. Appareil électroménager électrique selon l'une quelconque des revendications précédentes, dans lequel ledit appareil comprend des premiers moyens de chauffage électrique (3) ayant une résistance plus élevée par rapport à des seconds moyens de chauffage électrique (4) ayant une résistance plus faible.

14. Appareil électroménager électrique selon la revendication 13, dans lequel ladite résistance de puissance plus élevée (3) est entourée par la résistance de puissance plus faible s'étendant de manière périmétrique directement au-dessus de laquelle ledit conduit intermédiaire (2) est disposé.
